Europäisches Patentamt

European Patent Office

Office européen des brevets

(11) Veröffentlichungsnummer: **0 335 152**

**A2**

## EUROPÄISCHE PATENTANMELDUNG

(21) Anmeldenummer: **89104273.1**

(22) Anmeldetag: **10.03.89**

(51) Int. Cl.⁴: **B29D 29/06 , B29C 43/24**

(30) Priorität: **30.03.88 DE 3810812**

(43) Veröffentlichungstag der Anmeldung:
**04.10.89 Patentblatt 89/40**

(84) Benannte Vertragsstaaten:
**AT DE FR GB IT NL SE**

(71) Anmelder: **Continental AG**
**Königsworther Platz 1 Postfach 1 69**
**D-3000 Hannover 1(DE)**

(72) Erfinder: **Klabunde, Karlheinz**
**Möwengrund 7**
**D-3007 Gehrden 1(DE)**
Erfinder: **Körber, Werner**
**Wanneweg 6**
**D-3222 Freden(DE)**
Erfinder: **Specht, Hans**
**Falkenstrasse 6**
**D-3410 Northeim(DE)**

(74) Vertreter: **Schneider, Egon**
**c/o CONTINENTAL Aktiengesellschaft**
**Königsworther Platz 1 Postfach 169**
**D-3000 Hannover 1(DE)**

(54) **Verfahren zur Herstellung von Förderbändern und Anlage zu seiner Durchführung.**

(57) Verfahren zur Herstellung von Förderbändern, insbesondere aus bahnförmigen Kautschukprofilplatten mit einer Gewebeeinlage aus mehreren Gewebebahnen, mittels einer Abwickelstation zum Bereithalten und Einfüttern der zu bearbeitenden Gewebeeinlage, einer mehrwalzigen Kalanderstation zum Gummieren der Gewebeeinlage und Kalandrieren der Deckschichten und einer Aufnahmestation zur Aufnahme der fertigen Förderbänder. In einem ersten Arbeitsgang wird plastifizierter Kautschuk mit einem Extruder in einen ersten Walzenspalt einer mindestens fünf Kalanderwalzen aufweisenden Kalanderstation eingefüttert und zu Profilplatten fertigkalibriert. In einem zweiten Arbeitsgang wird der Kalanderstation eine vorgefertigte Gewebebahn zugeführt und mit im ersten Arbeitsgang vorgefertigten ersten und einer zweiten Profilplatte beidseitig gummiert und in einer der Kalanderstation nachgeordneten Konfektionieranlage vervielfacht. In einem dritten Arbeitsgang wird eine im ersten Arbeitsgang vorgefertigte und doublierte dickere Tragschicht und eine dünnere Laufschicht gegen die konfektionierte Gewebebahn geführt und alle drei Schichten in der Kalanderstation miteinander verbunden. Die konfektionierte Gewebelage wird dabei zunächst mit Gummikanten umgeben, die seitlich beschnitten und wieder eingefüttert werden.

FIG.1

## Verfahren zur Herstellung von Förderbändern und Anlage zu seiner Durchführung

Die Erfindung betrifft zunächst ein Verfahren zur Herstellung von Förderbändern, insbesondere aus bahnförmigen Kautschukprofilplatten mit einer Gewebeeinlage aus mehreren Gewebebahnen, mit einer Abwickelstation zum Bereithalten und Einfüttern der zu bearbeitenden Gewebeeinlage, einer mehrwalzigen Kalanderstation zum Gummieren der Gewebeeinlage und Kalandrieren der Deckschichten und einer Aufnahmestation zur Aufnahme der fertigen Förderbänder.

Ein derartiges Verfahren wird auf Einrichtungen durchgeführt, wie sie beispielsweise in der DE 25 28 219 beschrieben sind. Danach werden lange, bahnförmige Kautschukprodukte, insbesondere Fördergurte kontinuierlich hergestellt, die mit einer in Längsrichtung besonders belastbaren Verstärkungseinlage versehen sind. Um ihre Verrottung zu vermeiden, sind derartige Verstärkungseinlagen von allen Seiten mit Gummi zu umgeben. Dazu wird bei der bekannten Einrichtung die Verstärkungseinlage von einer Abwickelstation in einen Kalander eingeführt, wobei von oben und von unten jeweils eine Kautschukbahn, die auf separaten Abwickelstationen bevorratet sind, gegen die Gewebeeinlage geführt und in dem Kalander miteinander verbunden.

Da nicht jede gewünschte Plattendicke hergestellt werden kann, ohne daß diese Platten Luftblasen enthalten, bei spielsweise durch Vergrößerung des Walzenspaltes, müssen dickere Platten doubliert werden. Dazu ist aus der DE 26 01 265 eine Einrichtung bekannt, bei der zwei Plattenbahnen zwischen zwei sich gegeneinander drehende Walzen eingefüttert und zwischen einer dritten Walze zusammengefügt, d. h. doubliert und anschließend einer Aufwickelstation zugeführt werden. Derartige Plattenbahnen werden üblicherweise mit Hilfe von Spritzmaschinen hergestellt, die einen Breitspritzkopf aufweisen, mit dem ein dem gewünschten Artikelprofil entsprechendes Profil vorgeformt werden kann. Durch die Reibung an den Kanten des Mundstücks werden jedoch die Materialpartikel unterschiedlich abgebremst und es entstehen Spannungen in dem Profil. Aus der US 3, 871, 810 ist es dazu bekannt, dem Mundstück eine Walzenordnung zum Nachkalibrieren nachzuordnen. Die dabei erzeugten Platten sind Halbzeuge, die einer Weiterverarbeitung in einer weiteren Anlage zugeführt werden müssen.

Die in ein Förderband einzulegende Gewebeeinlage besteht oft aus einer Vielzahl von Einzelbahnen, die in einer besonderen, externen Konfektionieranlage hergestellt wird. Aus der CH 598 942 ist es dazu bekannt, mehrere Abwickelstationen, die jeweils eine einlagige Materialbahn bevorraten, hintereinander aufzureihen und die einzelnen Materialbahnen auf einem Gurtförderer zusammenzuführen und in einem Doublierkalander miteinander zu verbinden. Eine der artige Einrichtung weist jedoch einen sehr großen Platzbe darf für die Vielzahl von Abwickelstationen auf und ist auch nur diskontinuierlich zu betreiben, da die einzelnen Trommeln in den Abwickelstationen nach ihrem Ablaufen durch neue, volle Trommeln ersetzt werden müssen.

Aufgabe der vorliegenden Erfindung ist es, ein Verfahren der eingangs beschriebenen Art zu schaffen, nach dem sämtliche oben beschriebene Arbeitsgänge vereinfacht durchgeführt werden können und eine Anlage zu schaffen, auf der das Verfahren durchgeführt werden kann.

Gelöst wird diese Aufgabe zunächst dadurch, daß in einem ersten Arbeitsgang plastifizierter Kautschuk mit einem Extruder in einen ersten Walzenspalt einer mindestens fünf Kalanderwalzen aufweisenden Kalanderstation eingefüttert und zu Profilplatten fertigkalibriert wird, in einem zweiten Arbeitsgang der Kalanderstation eine vorgefertigte Gewebebahn zugeführt und mit im ersten Arbeitsgang vorgefertigten ersten und einer zweiten Profilplatten beidseitig gummiert und in einer der Kalanderstation nachgeordneten Konfektionieranlage vervielfacht wird und in einem dritten Arbeitsgang eine im ersten Arbeitsgang vorgefertigte und doublierte dickere Tragschicht und eine dünnere Laufschicht gegen die konfektionierte Gewebebahn geführt und alle drei Schichten in der Kalanderstation miteinander verbunden werden, wobei die konfektionierte Gewebelage zunächst mit Gummikanten umgeben wird, die seitlich beschnitten und wieder eingefüttert werden. Durch diese Maßnahmen wird ein Verfahren geschaffen, nach dem eine Vielzahl von Arbeitsschritten, die bei der Herstellung eines Fördergurts erforderlich sind, zusammengefaßt durchgeführt werden können. So kann durch Einfüttern von plastifiziertem Kautschuk in den ersten Walzenspalt eine Rohplatte hergestellt werden, die in dem zweiten Walzenspalt nachkalibriert und in dem dritten Walzenspalt fertigkalibriert werden kann. Diese so hergestellte Platte kann mit der gleichen Anlage doubliert werden, indem sie in den zweiten Walzenspalt und eine andere, in gleicher Weise vorgefertigte Platte in den vierten Walzenspalt eingeführt und beide Platten in dem dritten Walzenspalt gegeneinander geführt und miteinander verbunden werden. Dabei kann die erste Kalanderwalze ohne Funktion sein oder in oben beschriebener Weise der Ausformung der oberen Gummiplatte dienen.

Bevor sie mit dem Trag- und dem Laufstreifen versehen werden, werden die Gewebeeinlagen zur besseren Haftung beidseitig gummiert. Dazu wird die Gewebeeinlage, die in bekannten Speicherstationen vorgehalten wird, in den dritten Walzenspalt eingezogen, während gleichzeitig von oben eine durch den zweiten Walzenspalt eingefütterte obere Gummiplatte und von unten eine durch den vierten Walzenspalt eingefütterte zweite Gummiplatte gegen die Gewebeeinlage geführt und alle drei Lagen miteinander verbunden werden. Die Gewebeeinlage oder Karkasse wird in Konfektionierungs anlagen hergestellt, in dem kontinuierlich zugeförderte, einlagige Gewebebahnen zu beliebig dicken, mehrlagigen Materialbahnen durch reversierenden Betrieb konfektioniert werden.

Zur Fertigherstellung des Fördergurtes, d. h. zum Decken der Karkasse, die entsprechend dem oben beschriebenen Arbeitsgang vorgefertigt ist, ist es vorgesehen, daß der dikkere Tragstreifen mittels eines Extruders mit Breitspritzkopf in einen ersten Walzenspalt zwischen einer ersten Kalanderwalze und einer zweiten Kalanderwalze einer mindestens fünf Kalanderwalzen aufweisenden Kalanderstation eingefüttert, in einem zweiten Walzenspalt zwischen einer zweiten Kalanderwalze und einer dritten Kalanderwalze nachkalibriert und in einem dritten Walzenspalt zwischen einer dritten Kalanderwalze und einer vierten Kalanderwalze eingefüttert wird, die vorgefertigte Karkasse unter einer fünften Kalanderwalze hindurch in den vierten Walzenspalt zwischen der vierten Kalanderwalze und der fünften Kalanderwalze eingefüttert wird und die Karkasse laufseitig und an den Kanten in ebenfalls eingefütterten, plastifizierten Gummi eingebettet wird, und in dem dritten Walzenspalt aus dritter Kalanderwalze die dreiseitig mit Gummi eingehüllte Karkasse mit einem tragseitigen Tragstreifen abgedeckt wird, der mittels des Extruders mit Breitspritzkopf in den ersten Walzenspalt eingefüttert und in einem zweiten Walzenspalt endkalibriert wurde, wobei die Karkasse mit seitlichen Gummikanten umgeben wird, die seitlichen Gummikanten auf der dem Walzenspalt abgewandten Seite seitlich beschnitten und die abgeschnittenen Ränder wieder in den vierten Walzenspalt zwischen der vierten Kalanderwalze und der fünften Kalanderwalze eingefüttert werden.

Zum einfüttern des plastifizierten Kautschukmaterials ist es vorteilhaft, dieses mit Hilfe eines mit einem Breitspritzkopf versehenen Extruders in den ersten Walzenspalt einzufüttern. Der so hergestellt Fördergurt läuft in eine dem dritten Walzenspalt nachgeordnet Aufnahmestation, beispeilsweise eine Kühlstrecke und ein Wickelband mit Doublierstationen oder Wickelbock der Abwickelstation ein und kann dort seitlich entnommen werden.

Für eine Anlage zur Durchführung dieses Verfahren ist es vorgesehen, daß die Kalanderstation mindestens fünf Kalanderwalzen umfaßt, einem der Walzenspalte der Kalanderwalzen ein Extruder zum Einfüttern des zu verarbeitenden Kautschukmaterials zugeordnet ist, und der Kalanderstation eine Konfektionieranlage zum Konfektionieren der gummierten Gewebelagen und eine Doublierwerk zum Doublieren der kalandrierten Kautschukprofilplatten nachgeordnet sind.

Weitere vorteilhafte Maßnahmen sind in den Unteransprüchen beschrieben. Die Anlage zur Durchführung des erfindungsgemäßen Verfahrens ist in der beiliegenden Zeichnung darge stellt und wird nachfolgend näher beschrieben; es zeigt:

Fig. 1 einen ersten Teilabschnitt der Gesamtanlage mit Abwickelstation, Speicherstation und Kalanderstation;

Fig. 2 einen zweiten Teilabschnitt der Gesamtanlage mit Wickelband mit nicht näher bezeichneten Doublierstationen, Aufwickelstation und Übergabestation;

Fig. 3 einen dritten Teilabschnitt der Gesamtanlage mit der Konfektionieranlage.

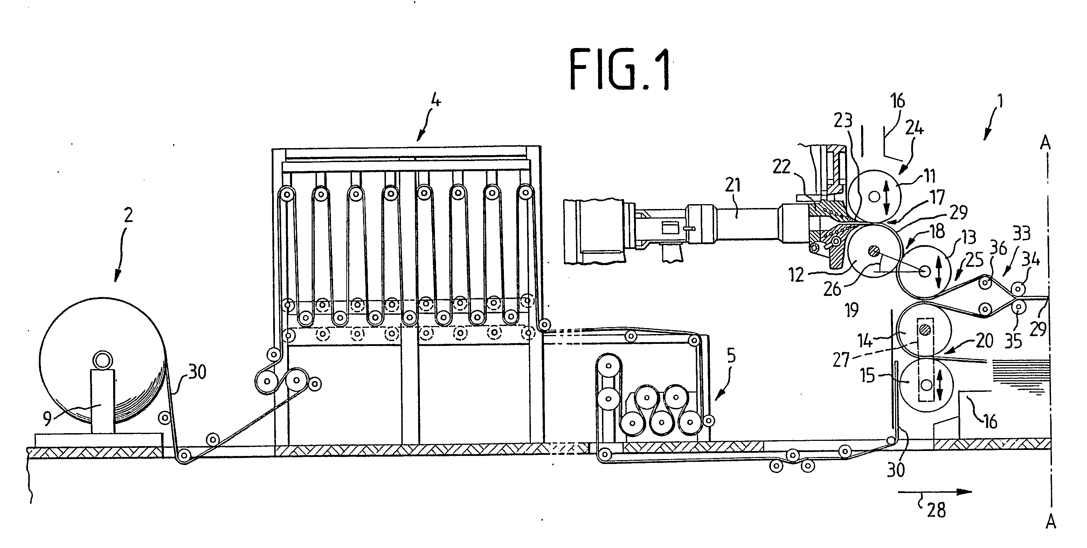

Die in den Figuren 1 bis 3 dargestellte Einrichtung 1 besteht im wesentlichen aus einer Abwickelstation 2, auf der auf Wickelböcken 9 aufgewickeltes Vormaterial bevorratet wird, einer Kalanderstation 10 und einer Aufwickelstation 3, in der das von der Kalanderstation kommende Vor- oder Fertigprodukt ebenfalls auf Wickelböcken 9 aufgewickelt wird.

Um bei der Beschichtung von Gewebelagen 30 eine kontinuierliche Bearbeitung zu ermöglichen, ist der Kalanderstation 10 eine Speicherstation 4 vorgeschaltet, mit der über Spannungsrückhaltungsvorrichtungen 5 das einlaufende Gut bevorratet und unter Spannung gehalten wird. Das aus der Kalanderstation 10 kommende Halb- oder Fertigprodukt kann in eine Kühlstrecke 6 und/oder eine Ausgleichsvorrichtung 7 einlaufen und/oder einem Wickelband mit Doublierstationen 8 oder einer Aufwickelstation 3 mit Wickelböcken 9 oder einer Konfektionieranlage 40 zugeführt werden.

Die Kalanderstation 10 besteht im wesentlichen aus einer ersten Kalanderwalze 11 und einer senkrecht darunter angeordneten zweiten Kalanderwalze 13. Bei der gezeigten Ausführungsform ist die erste Kalanderwalze 11 höhenverstellbar und die zweite Kalanderwalze 12 feststehend in einem Walzenständer 16 angeordnet. Zwischen der ersten Kalanderwalze 11 und der zweiten Kalanderwalze 12 ist ein erster Walzenspalt 17 vorhanden, der in seiner Höhe durch die Höhenverstellung der ersten Kalanderwalze 11 variabel ist.

Parallel zu der ersten vertikalen Walzengruppe 24, bestehend aus der ersten Kalanderwalze 11 und der zweiten Kalanderwalze 12, verläuft eine zweite vertikale Walzengruppe 25, die eine dritte Kalanderwalze 13, eine vierte Kalanderwalze 14 und eine fünfte Kalanderwalze 15 umfaßt. Die dritte Kalanderwalze 13 ist dabei die oberste der zweiten Walzengruppe 25 und um einen vorbestimmten Winkel 26 aus der Horizontalen gegenüber der zweiten Kalanderwalze 12 herabgesetzt. Der Winkel 26, um den die dritte Kalanderwalze 13 schräg unterhalb der zweiten Kalanderwalze 12 angeordnet ist, beträgt ca. 10 bis 45 Grad, vorzugsweise beträgt er 30 Grad.

Die dritte Kalanderwalze 13 ist horizontal beweglich, so daß der zweite Walzenspalt 18 zwischen ihr und der zweiten Kalanderwalze 13 variiert werden kann, während gleichzeitig der dritte Walzenspalt 19 zwischen der dritten Kalanderwalze 13 und der feststehenden vierten Kalanderwalze 14 im wesentlichen konstant bleibt.

Senkrecht unterhalb der vierten Kalanderwalze 14 ist eine fünfte Kalanderwalze 15 angeordnet. Dieses Walzenpaar 14 und 15 bildet zwischen sich einen vierten Walzenspalt 20. Die fünfte Kalanderwalze 15 ist wiederum senkrecht höhenverstellbar, so daß auch der vierte Walzenspalt 20 variiert werden kann. Bei einer anderen Ausführungsform ist die fünfte Kalanderwalze 15 um einen vorbestimmten Winkel schräg unterhalb der vierten Kalanderwalze 14 und in der Vertikalen parallel zu dieser angeordnet.

Die vierte Kalanderwalze 14 und die fünfte Kalanderwalze 15 sind in einem gemeinsamen Walzenblock gelagert. Die vierte Kalanderwalze 14 ist in diesem Walzenblock feststehend und die fünfte Kalanderwalze 15 in ihrer Höhe variabel; gemeinsam sind diese beiden Walzen 14 und 15 mit dem Walzenblock höhenverstellbar, so daß auch der dritte Walzenspalt 19 zwischen der dritten Kalanderwalze 13 und der vierten Kalanderwalze 14 in seiner Höhe variabel ist.

Wie die Fig. 1 weiter zeigt, ist dem ersten Walzenpaar 11 und 12 ein Extruder 21 zugeordnet, mit dem plastifiziertes Kautschukmaterial mittels eines Breitspritzkopfes 22 mit einem entsprechenden Mundstück 23 vorprofiliert dem ersten Walzenspalt 17 zugeführt werden kann.

Der Extruder 21 liegt hoch gegenüber der zweiten Walzengruppe 25 und kann zur Ausformung vorgeformter Plattenprofile von dem ersten Walzenspalt 17 weggefahren werden. Die dabei vorgefertigten Plattenprofile 29 können zum beidseitigen Gummieren einer Gewebelage 30 in dem dritten Walzenspalt 19 dienen. Dazu wird ein erstes Plattenprofil 29 in den zweiten Arbeitsspalt 18 und ein zweites Plattenprofil 29 in den vierten Arbeitsspalt 20, beide gegen die allgemeine Arbeitsrichtung 28 (Pfeil), eingefüttert und in Arbeitsrichtung 28 in den dritten Arbeitsspalt 19 eingeführt und dort mit der Gewebelage 30 zusammengebracht.

Das Doublierwerk 33 ist dem dritten Walzenspalt 19 nachgeordnet und besteht aus einer ersten Doublierwalze 34 und einer zweiten Doublierwalze 35. Zum Doublieren werden die dritte Kalanderwalze 13 und die vierte Kalanderwalze 14 soweit auseinander gefahren, daß die zu doublierenden Plattenprofile 29 berührungslos durch den dritten Walzenspalt 19 geführt werden können. Dazu kann ein erstes Plattenprofil 29 direkt vom Extruder 21 gespritzt und in oben beschriebener Weise kalibriert werden, während ein zweites, vorgefertigtes und in einem Plattenstapel 32 bevorratetes Plattenprofil 29 gegen die Arbeitsrichtung 28 in den vierten Walzenspalt 20 eingefüttert und dem dritten Walzenspalt 19 zugeführt wird. Damit die zu doublierenden Plattenprofile 29 nicht schon vor dem Doublierwerk 33 miteinander in Berührung kommen und verkleben, werden sie von Umlenkrollen 36 geführt und auseinander gehalten.

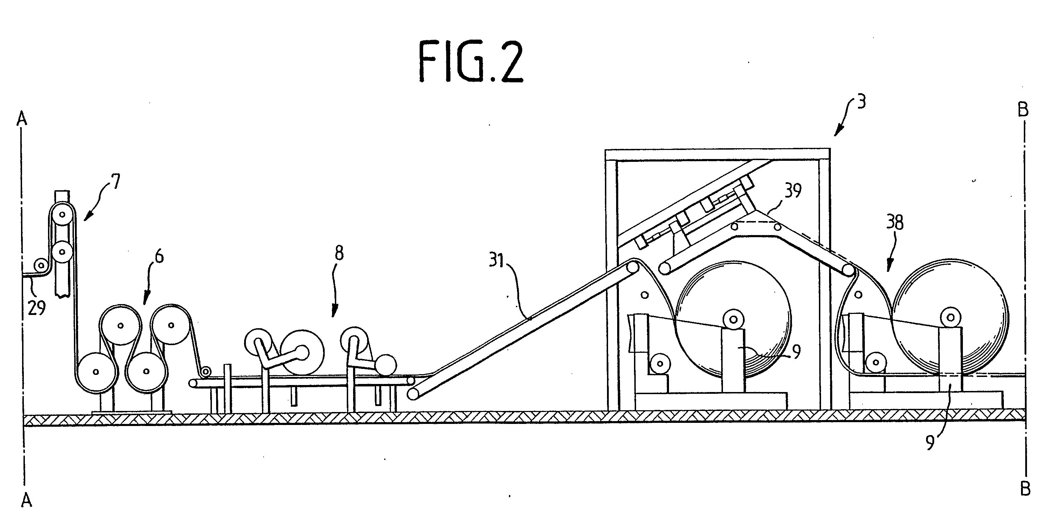

Wie die Fig. 2 zeigt, wird die zugeführte Materialbahn 48 in einer der Aufwickelstation 3 zugeordneten Übergabestation 39 an eine Überbrückung 38 übergeben; die Wickelböcke 9 sind dabei außer Funktion. An die Überbrückung 38 schließen sich eine Spannungsrückhaltung 37 und eine weitere Speicherstation 4 an.

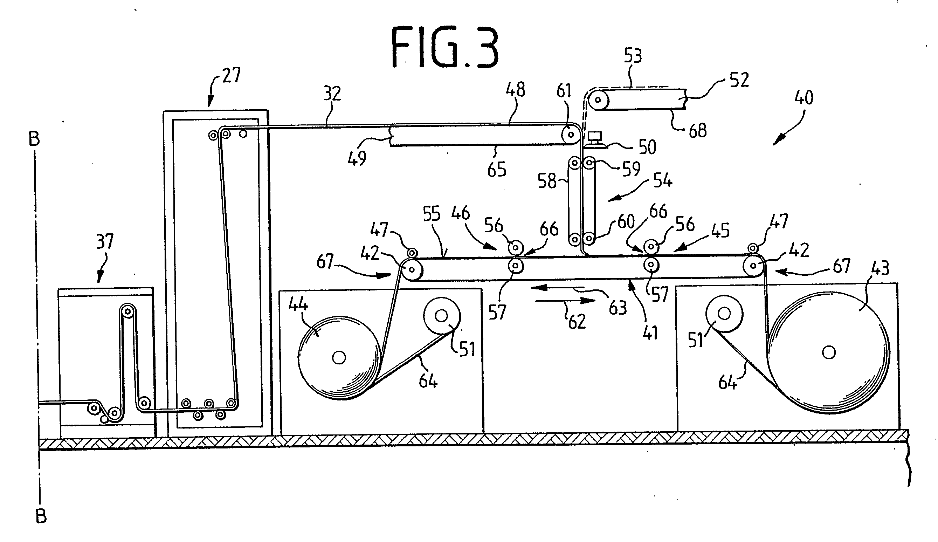

Die in der Fig. 3 dargestellte, sich in Arbeitsrichtung 28 weiter anschließende Konfektionieranlage 40 besteht im wesentlichen aus einer Fördereinrichtung 41 in Form eines um Umlenkrollen 42 geführten Förderbandes 65 und einer oberhalb dieser Fördervorrichtung 41 angeordneten Zuführvorrichtung 49. Die Fördervorrichtung 41 ist mit zwei Doublierkalandern 45 und 46 versehen, die außermittig, einander gegenüberliegend angeordnet sind, und das Förderband 65 der Fördervorrichtung 41 läuft mit seinem Obertrum 55 durch deren Walzenspalt 66. Die Doublierkalander 45 und 46 bestehen jeweils aus einer Oberwalze 56 und einer Unterwalze 57, die zwischen sich den Walzenspalt 66 bilden.

Die Fördervorrichtung 41 ist reversierbar, dh, ihr Förderband 65 kann von einer ersten Arbeitsrichtung 62 (Pfeil) in eine zweite Arbeitsrichtung 63 (Pfeil) umgekehrt werden. An den beiden freien Enden 67 der Fördervorrichtung 41 sind Wickelrollen 43 und 44 zur Aufnahme der bearbeiteten Materialbahn 48 vorgesehen.

Die oberhalb der Fördervorrichtung 41 vorgesehene Zuführvorrichtung 49 besteht aus einem Förderband 31, das mit seiner vorderen Umlenkrolle 61 etwa mittig zwischen den Doublierkalandern 45 und 46 über der Fördervorrichtung 41 endet.

Unterhalb der vorderen Umlenkrolle 61 der Zuführvorrichtung 49 wird die Materialbahn 48 an einen im wesentlichen senkrecht stehenden Bandzuführer 54 übergeben. Der Bandzuführer 54 besteht aus zwei Förderbändern 58, die um obere Umlenkrollen 59 und untere Umlenkrollen 60 laufen. Dieser Bandzuführer 54 reicht bis in den Be-

reich des Obertrums 55 des Förderbandes 65 der Fördervorrichtung 41 und kann die zugeförderte Materialbahn 48 dort vor dem jeweils zuerst aktiven Doublierkalander 45 oder 46 ablegen.

Läuft die Fördervorrichtung 41 in der ersten Arbeitsrichtung 62, so wird die zugeförderte Materialbahn 48 zuerst durch den ersten Doublierkalander 45 geführt und auf die erste Aufwickelrolle 43 aufgewickelt. Hat die aufgewickelte Materialbahn 48 die gewünschte Länge erreicht, so kann sie mit einem Schneidmesser 50 auf diese Länge abgetrennt werden. Damit das nunmehr freie Ende der abgetrennten Materialbahn 48 nicht von der Fördervorrichtung 41 abrutscht, sind im Bereich der Umlenkrollen 42 des Förderbandes 65 Gegenhalterwalzen 47 angeordnet.

Nachdem das abgetrennte freie Ende der Materialbahn 48 den ersten Doublierkalander 45 in der ersten Arbeitsrichtung 62 verlassen hat, wird das Förderband 65 in die gegenläufige zweite Arbeitsrichtung 63 umgestellt. Das freie Ende ist nun vorn und die auf der ersten Wickelrolle 43 aufgewickelte Materialbahn 48 wird nun abgewickelt.

Etwa in der Mitte zwischen dem ersten Doublierkalander 45 und dem zweiten Doublierkalander 46 wird die mit der Zuführvorrichtung 49 kontinuierlich weiter zugeförderte Materialbahn 48 auf die erste abgeschnittene Materialbahn geführt und beide Materialbahnen werden in den Walzenspalt 66 des zweiten Doublierkalanders 46 eingeführt und dort miteinander verbunden. Nach Verlassen des zweiten Doublierkalanders 46 wird die nun doppelte Materialbahn auf die zweite Wickelrolle 44 aufgewickelt.

Hat die aufdoublierte Materialbahn 48 die Länge der ersten erreicht, so kann sie wiederum mit dem Schneidmesser 50 von der kontinuierlich weiterlaufenden Materialbahn 48 abgeschnitten werden. Soll eine dritte Lage aufdoubliert werden, so kann die Fördervorrichtung 41 wieder in die erste Arbeitsrichtung 62 umgestellt werden. Die nun doppelte Materialbahn läuft von der zweiten Wickelrolle 44 wieder ab. Wiederum etwa in der Mitte zwischen den Doublierkalandern 45 und 46 wird die dritte Lage zugeführt und alle drei Lagen werden dann in dem ersten Doublierkalander 45 miteinander verbunden und auf die erste Wickelrolle 43 aufgewickelt. Das Ende der dritten Lage kann wiederum mit dem Schneidmesser 50 von der auf der Zuführvorrichtung 49 kontinuierlich weitergeförderten Materialbahn abgetrennt werden. Dieser Vorgang kann beliebig oft durch die Umkehrung der Arbeitsrichtung der Fördervorrichtung 41 wiederholt werden, bis eine Materialbahn mit der jeweils gewünschten Anzahl von Gewebelagen 30 konfektioniert ist.

Damit die durch das Doublieren mehrerer Materialbahnen 48 konfektionierten Gewebebahnen oder Karkassen 32 beim Aufwickeln nicht verkleben, sind den Wickelrollen 43 und 44 jeweils Trommeln 51 zugeordnet, von denen Zwischenläufer 64 abgezogen und zwischen die aufgewickelten Bahnen geführt werden können.

Der Fördervorrichtung 41 kann eine zweite Zuführvorrichtung 52 zugeordnet sein, mit der eine zweite Materialbahn 53 zugefördert werden kann. Diese zweite Materialbahn 53 kann entweder das gleiche Material wie die Materialbahn 48 haben und extern hergestellt sein oder aus einem extern hergestellten anderen Material bestehen, das mit der ersten Materialbahn 48 zu einer Zweikomponentenbahn doubliert werden soll.

Diese so konfektionierten Karkassen werden der Kalanderstation 10 zugeführt und dort zu Fördergurten fertiggestellt. Ein derartiger Fördergurt besteht im wesentlichen aus der mehrlagigen Karkasse, die auf ihrer Oberseite mit einem dickeren Traggummi und an ihrer Unterseite mit einem dünneren Laufgummi versehen ist.

Um die Verrottung einer derartigen Karkasse zu vermeiden, sind auch ihre Seiten mit Gummikanten umgeben. In der Kalanderstation 10 wird dazu den oben beschriebenen Deckgummis ein seitlicher Überstand zugegeben, der mit dem Walzenspalt 19 nachgeordneten, nicht dargestellten seitlichen Scheibenmessern wieder abgeschnitten wird. Die abgeschnittenen Gummikanten werden wieder eingefüttert und weiterverwendet.

## Ansprüche

1. Verfahren zur Herstellung von Förderbändern, insbesondere aus bahnförmigen Kautschukprofilplatten mit einer Gewebeeinlage aus mehreren Gewebebahnen, mit einer Abwickelstation zum Bereithalten und Einfüttern der zu bearbeitenden Gewebeeinlage, einer mehrwalzigen Kalanderstation zum Gummieren der Gewebeeinlage und Kalandrieren der Deckschichten und einer Aufnahmestation zur Aufnahme der fertigen Förderbänder, dadurch gekennzeichnet, daß in einem ersten Arbeitsgang plastifizierter Kautschuk mit einem Extruder in einen ersten Walzenspalt einer mindestens fünf Kalanderwalzen aufweisenden Kalanderstation eingefüttert und zu Profilplatten fertigkalibriert wird, in einem zweiten Arbeitsgang der Kalanderstation eine vorgefertigte Gewebebahn zugeführt und mit im ersten Arbeitsgang vorgefertigten ersten und einer zweiten Profilplatten beidseitig gummiert und in einer der Kalanderstation nachgeordneten Konfektionieranlage vervielfacht wird und in einem dritten Arbeitsgang eine im ersten Arbeitsgang vorgefertigte und doublierte dickere Tragschicht und eine dünnere Laufschicht gegen die konfektionierte Gewebebahn geführt und alle drei Schichten in der Kalanderstation miteinander verbunden werden, wobei die konfektionierte Gewebelage zunächst mit Gummikanten umgeben wird, die seitlich beschnitten und wieder eingefüttert werden.

2. Verfahren nach Anspruch 1, dadurch gekennzeichnet, daß die im ersten Arbeitsgang ausgeformten und kalibrierten Profilplatten im gleichen Arbeitsgang einem der Kalanderstation nachgeordneten Doublierwerk zugefüttert und dort doubliert werden.

3. Verfahren nach den Ansprüchen 1 und 2, dadurch gekennzeichnet, daß die im zweiten Arbeitsgang gummierten Gewebebahnen in einer der Kalanderstation nachgeordneten Konfektlonieranlage zu mehrlagigen Gewebeeinlagen vervielfacht werden.

4. Verfahren nach den Ansprüchen 1 und 3, dadurch gekennzeichnet, daß die mindestens einen Doublierkalander aufweisende Konfektionieranlage reversierbar betrieben wird.

5. Anlage zur Herstellung von Förderbändern, insbesondere von Förderbändern mit beidseitig gummierten Gewebeeinlagen, einer Deckschicht auf der Tragseite und einer Deck schicht auf der Laufseite, mit einer Abwickelstation zum Bereithalten und Einfüttern der zu bearbeitenden Gewebeeinlage, einer Kalanderstation zum Gummieren der Gewebeeinlage und Kalandrieren der Deckschichten und einer Aufnahmestation zur Aufnahme der kalandrierten Produkte, dadurch gekennzeichnet, daß die Kalanderstation (10) mindestens fünf Kalanderwalzen (11, 12, 13, 14, 15) umfaßt, einem der Walzenspalte (17) der Kalanderwalzen (11, 12) ein Extruder (21) zum Einfüttern des zu verarbeitenden Kautschukmaterials zugeordnet ist, und der Kalanderstation (10) eine Konfektionieranlage (40) zum Konfektionieren der gummierten Gewebelagen (30) und ein Doublierwerk (33) zum Doublieren der kalandrierten Kautschukprofilplatten (29) nachgeordnet sind.

6. Anlage nach Anspruch 5, dadurch gekennzeichnet, daß der Extruder (21) einen Breitspritzkopf (28) aufweist, der in der allgemeinen Arbeitsrichtung (28) der Kalanderstation (10) arbeitet.

7. Anlage nach den Ansprüchen 5 und 6, dadurch gekennzeichnet, daß die Kalanderstation (10) zwischen der dritten Kalanderwalze (13) und der vierten Kalanderwalze (14) einen dritten Walzenspalt (19) aufweist und das Doublierwerk (33). diesem dritten Walzenspalt (19) nachgeordnet ist.

8. Anlage nach den Ansprüchen 1 bis 3, dadurch gekennzeichnet, daß die Konfektionieranlage (40) aus einer Fördervor richtung (41) mit mindestens einem reversierbaren Doublierkalander (45, 46) besteht.

9. Anlage nach einem oder mehreren der Ansprüche 5 bis 8, dadurch gekennzeichnet, daß der Doublierkalander (45, 46) außermittig auf der Fördervorrichtung (41) angeordnet ist.

10. Anlage nach einem oder mehreren der Ansprüche 5 bis 9, dadurch gekennzeichnet, daß die Fördervorrichtung (11) als ein zwei freie Enden (67) aufweisendes Förderband (65) ausgebildet ist und an jedem freien Ende (67) mindestens eine Aufwickelstation (43, 44) angeordnet ist.

11. Anlage nach einem oder mehreren der Ansprüche 5 bis 10, dadurch gekennzeichnet, daß die Aufwickelstation (3) mit einer oberhalb des Förderbandes (31) angeordneten Übergabestation (39) zur Zuführung der zu konfektionierenden Materialbahn (48) an eine Konfektionieranlage (40) versehen ist.

12. Anlage nach einem oder mehreren der Ansprüche 5 bis 11, dadurch gekennzeichnet, daß das Obertrum (55) des Förderbandes (65) der Fördervorrichtung (41) mit durch den Doublierkalander (45, 46) läuft.

13. Anlage nach einem oder mehreren der Ansprüche 5 bis 12, dadurch gekennzeichnet, daß der Zuführvorrichtung (99, 52) ein Schneidmesser (50) zur Ablängung der zu konfektionierenden Materialbahn (48) zugeordnet ist.

14. Anlage nach einem oder mehreren der Ansprüche 5 bis 13, dadurch gekennzeichnet, daß der dritte Walzenspalt (19) vor dem Doublierwerk (33) zur berührungslosen Durchführung der zu doublierenden Profile (29) auseinanderfahrbar ist und zwischen dem Doublierwerk (33) und der Kalanderstation (10) Umlenkrollen (36) zur Zuführung der Profilplatten (29) vorgesehen sind.

# FIG.1

EP 0 335 152 A2

Continental AG, Hannover

# FIG.2

EP 0 335 152 A2

# FIG.3

EP 0 335 152 A2